(19) Europäisches Patentamt
European Patent Office
Office européen des brevets

(11) Veröffentlichungsnummer: **0 019 269**
**B1**

(12) **EUROPÄISCHE PATENTSCHRIFT**

(45) Veröffentlichungstag der Patentschrift:
07.12.83

(51) Int. Cl.³: **H 04 N 5/33, H 04 N 3/15**

(21) Anmeldenummer: **80102670.9**

(22) Anmeldetag: **14.05.80**

(54) **Verfahren und Schaltungsanordnung zur Trennung des thermischen Hintergrundsignals eines IR-Detektors vom Nutzsignal.**

(30) Priorität: **17.05.79 DE 2919936**

(43) Veröffentlichungstag der Anmeldung:
**26.11.80 Patentblatt 80/24**

(45) Bekanntmachung des Hinweises auf die Patenterteilung: **07.12.83 Patentblatt 83/49**

(84) Benannte Vertragsstaaten:
**FR GB NL SE**

(56) Entgegenhaltungen:
**GB-A- 1 229 820**
**US-A- 3 845 295**
**US-A- 3 969 634**
**IEEE JOURNAL OF SOLID-STATE CIRCUITS, Band SC-11, Nr. 1, Februar 1976, New York, US, E.S. KOHN: "A charge-coupled infrared imaging array with Schottky-barrier detectors", Selten 140-146**

(73) Patentinhaber: **Licentia Patent-Verwaltungs-GmbH Theodor-Stern-Kal 1 D-6000 Frankfurt/Main 70 (DE)**

(72) Erfinder: **Manck, Otto, Dr. rer. nat. Im Grund 3 D-7900 Ulm (DE)**
Erfinder: **Rödde, Klaus, Dipl.-Phys. Trollingerweg 6 D-7901 Illerkirchberg (DE)**
Erfinder: **Wulf, Hans-Jürgen, Dipl.-Ing. Hasenbühlweg 53 D-7900 Ulm (DE)**
Erfinder: **Schulz, Max, Dr. rer. nat. Prof. Ruhsteinweg 13 D-8521 Uttenreuth (DE)**

(74) Vertreter: **Schickle, Gerhard, Dipl.-Ing. et al Licentia Patent-Verwaltungs-GmbH Theodor-Stern-Kal 1 D-6000 Frankfurt/Main 70 (DE)**

# Verfahren und Schaltungsanordnung zur Trennung des thermischen Hintergrundsignals eines IR-Detektors vom Nutzsignal

Die Erfindung betrifft ein Verfahren zur Trennung des thermischen Hintergrundsignals eines IR-Detektors vom Nutzsignal mit einer Einrichtung zur periodischen Abblendung des Detektors und unter Verwendung zweier Kondensatoren gleicher Kapazität zum Speichern von dem Nutz- und dem Hintergrundsignal proportionalen Ladungen und zur Erzeugung einer dem Nutzsignal proportionalen Differenzspannung und eine Schaltungsanordnung zur Durchführung des Verfahrens.

Die Aufnahme von Bildern unter Verwendung der IR-Strahlung des Aufnahmegegenstandes hat den Nachteil, daß die Strahlungsunterschiede des Aufnahmegegenstandes oft sehr gering sind, insbesondere, wenn IR-Strahlung von Gegenständen nahezu gleicher Temperatur ausgeht. Die Strahlung, deren Intensität sich von der des thermischen Hintergrundsignals unterscheidet, bildet im wesentlichen das Nutzsignal.

Thermische Hintergrundstrahlung tritt auch dann auf, wenn der zur Aufnahme der vom Aufnahmegegenstand ausgehenden IR-Strahlung verwendete IR-Detektor durch eine Blende von der aufzunehmenden Strahlung abgedeckt wird, da bekanntlich auch die Blende eine IR-Strahlung emittiert.

Die Erfindung geht aus von einer Schaltungsanordnung zur Aufnahme eines Gegenstandes oder einer Landschaft mittels der von ihr ausgehenden IR-Strahlung, bei der zur Bildaufnahme mehrere IR-Detektoren benutzt werden, die zur Eliminierung der thermischen Hintergrundstrahlung periodisch abgeblendet werden.

Es ist bekannt, zur Eliminierung der Hintergrundstrahlung jedem IR-Detektor einen eigenen Verstärker zuzuordnen und dessen jeweiligen Verstärkungsgrad an die exemplarstreuungsbedingte unterschiedliche Empfindlichkeit der IR-Detektoren anzupassen, derart, daß die Ausgangssignale der jeweiligen Verstärker bei gleicher IR-Bestrahlung der Detektoren gleiche Ausgangssignale abgeben. Mittels einer weiteren Schwellenschaltung oder eines Differenzverstärkers wird anschließend vom Nutzsignal ein dem Hintergrundsignal entsprechender Betrag subtrahiert, so daß eine Erhöhung des Bildkontrastes erzielt wird.

Die bekannten Schaltungsanordnungen haben jedoch den Nachteil, daß für jeden Detektor ein eigener Verstärker erforderlich ist, der außerdem abgeglichen werden muß. Die bekannten Lösungen erfordern folglich viel Platz, Aufwand und Justierarbeit.

Aus der US-PS 3 845 295 ist es bekannt, von einem Bildsignal (frame), welches Nutzsignal und Hintergrundsignal enthält, jeweils das folgende Bildsignal, welches nur Hintergrundsignal enthält, zu subtrahieren, um so zum gewünschten Nutzsignal zu gelangen.

In der GB-PS 1 229 820 wird vorgeschlagen, einen einzigen Speicherkondensator in einem Brückenkreis derart zu verwenden, daß er gleichzeitig als Speicher für das Summensignal (aus Nutz- und Hintergrundsignal) wie auch als Speicher für das Hintergrundsignal allein dient. Hierzu wird der Kondensator während einer vorgebbaren Zeitdauer vom Strom des belichteten Detektors aufgeladen und während einer anschließenden, gleich langen Zeitdauer durch den Strom des nun unbelichteten Detektors entladen. Die verbleibende Ladungsmenge bildet das Nutzsignal. Dieses System erfordert eine große Anzahl von Schaltern und eine komplizierte Steuerlogik.

Bei der US-PS 3 969 634 wird zur besseren Trennung des Nutzsignals vom Hintergrundsignal stets eine konstante Ladungsmenge von der gesamten, einen Bildpunkt zugeordneten Ladungsmenge subtrahiert. Lediglich der Überschuß wird weiterverarbeitet. Hierbei wird offensichtlich eine sehr geringe Streuung der Empfindlichkeit der Infrarot-Detektoren vorausgesetzt. Tatsächlich liegt jedoch die Empfindlichkeitsstreuung und damit die Streuung der erzeugten Ladungsmenge einer Vielzahl von Detektoren bei gleicher Belichtung bei 20 %. Unter Berücksichtigung dieser Streuung ist der erzielbare Gewinn an Störabstand zwischen Nutzsignal und Hintergrundsignal relativ gering, so daß die Auflösung von Bildern unter Verwendung der Infrarot-Strahlung nicht befriedigt.

Der Erfindung liegt die Aufgabe zugrunde, den bekannten Stand der Technik zu verbessern. Insbesondere soll eine Schaltungsanordnung angegeben werden, welche möglichst wenig Platz beansprucht, nicht abgeglichen zu werden braucht, bei der möglichst viele IR-Detektoren auf einem Halbleiter-Chip inklusive Auswerteeinheiten integrierbar sind und die eine bessere Trennung des Nutzsignals vom Hintergrundsignal ermöglicht.

Die Aufgabe wird durch die im Anspruch 1 angegebene Erfindung gelöst. Dabei geben Anspruch 1 die Lehre für die Signalverarbeitung und die Ansprüche 2 bis 4 vorteilhafte Ausgestaltungen der Erfindung an.

Dadurch, daß von zwei auf gleiche Spannung geladenen Kondensatoren gleicher Kapazität der eine Kondensator durch den belichteten Detektor, der andere während der gleichen Zeit durch den unbelichteten Detektor entladen wird, erzeugt die entstehende Spannungsdifferenz über die Elektroden eines Ladungstransferelementes Ladungen, die dem Nutzsignal exakt proportional sind, so daß eine hohe Linearität der Signalumwandlung erzielt und Umwandlungsfehler durch Fertigungstoleranzen der Bauelemente weitgehend vermieden werden. Außerdem ist durch die jeweilige Entladung der Kondensatoren durch den Detektorstrom die maximal mögliche Signalamplitude begrenzt, so daß bei großer Detektorbestrahlung keine Übersteuerung der Bauelemente auftreten kann (Antiblooming).

Die Ausgestaltung der Schaltungsanordnung nach Anspruch 2 läßt sich in vorteilhafter Weise raumsparend integrieren. Die IR-Detektoren können in vorteilhafter Weise in das gleiche Halbleiter-Chip integriert werden und da die räumliche Größe der erfindungsgemäßen Schaltungsanordnung in der gleichen Größenordnung liegt wie der IR-Detektor, kann sie für jeden Detektor einmal vorgesehen werden. Auf diese Weise lassen sich IR-Detektor-Arrays herstellen, deren Ausgangssignale sich ohne großen Aufwand auswerten lassen.

Zweckmäßigerweise wird die erfindungsgemäße Schaltungsanordnung in MOS-Planar-Technologie realisiert, da Ladungstransferelemente, IR-Detektoren und Kondensatoren einfach und zuverlässig und ohne wesentliche Exemplarstreuungen erstellt werden können.

Die Erfindung wird nun anhand eines Ausführungsbeispiels und an Zeichnungen näher erläutert. Es zeigen im einzelnen :

Figur 1   Schaltungsanordnung gemäß der Erfindung ;

Figur 2   Impulsplan zur Steuerung der in Fig. 1 angegebenen Schaltungsanordnung ;

Figur 3   Prinzip der strahlungsabhängigen Ladungseinspeisung in das Ladungstransferelement.

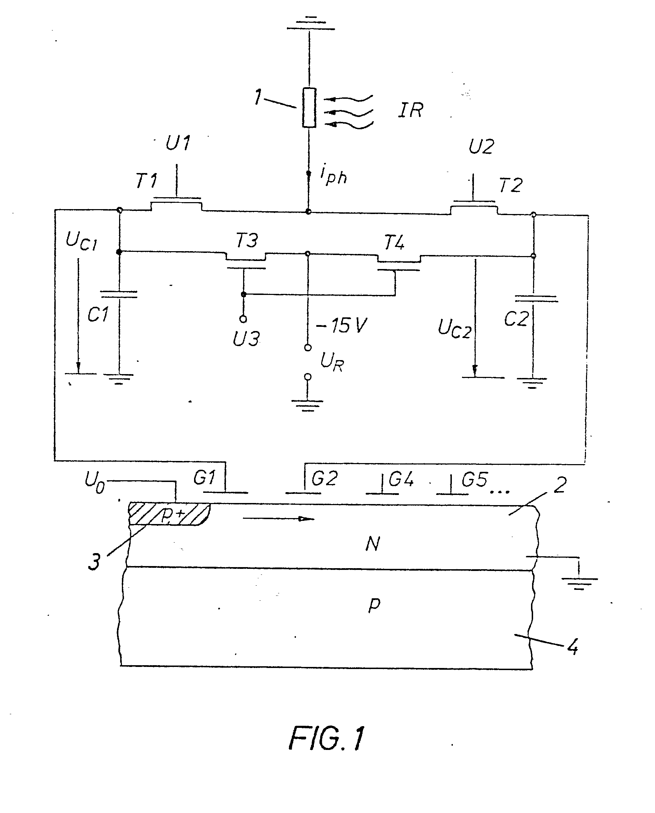

In Fig. 1 ist mit 1 ein IR-Detektorelement bezeichnet, dessen eines Ende auf Bezugspotential (Masse) liegt und dessen anderes Ende zum einen über einen ersten Feldeffekt-Transistor (FET) T1 mit einem ersten Kondensator C1 und zum anderen über einen zweiten FET T2 mit einem zweiten Kondensator C2 verbindbar ist. Der Verbindungspunkt von Transistor T1 und Kondensator C1 ist außerdem an einer ersten Steuerelektrode G1 eines Ladungstransferelementes 4 angeschlossen und über einen dritten FET T3 mit einer Referenzspannungsquelle $U_R$ verbindbar. In gleicher Weise ist der Verbindungspunkt von Transistor T2 und Kondensator C2 an einer zweiten Steuerelektrode G2 des Ladungstransferelementes 4 angeschlossen und über einen vierten FET T4 mit der Referenzspannung $U_R$ verbindbar. Die jeweils anderen Anschlüsse der Kondensatoren C1 und C2 sowie der Referenzspannungsquelle $U_R$ liegen auf konstantem Potential, im Ausführungsbeispiel auf Massepotential.

Das Ladungstransferelement 4 hat ein Substrat aus P-leitendem Silizium mit aufdotierter N-leitender Schicht 2, über der die Steuerelektroden G1, G2, ... in an sich bekannter Weise isoliert aufgebracht sind. Die Steuerelektroden G4, G5, ... dienen zum Ladungstransfer der mittels einem, eine Diode bildenden PN-Übergang zwischen einem an eine Diodenspannung U0 angeschlossenen P⁺-Gebiet 3 und dem N-Gebiet 2 eingebrachten Ladung.

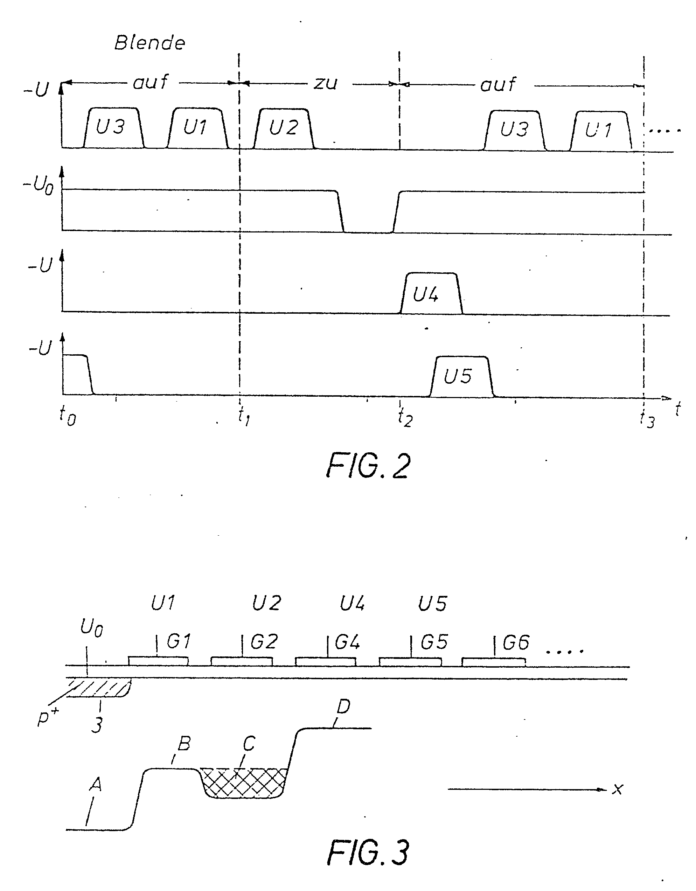

Zum Betrieb der Schaltungsanordnung werden der IR-Detektor periodisch belichtet und die Gate-Elektroden der FET T1 bis T4 entsprechend dem in Fig. 2 gezeigten Impulsplan ausgesteuert.

Beim Ausführungsbeispiel sind MOS-FET vom P-Typ vorgesehen, so daß sie bei einer Gate-Spannung von Null Volt gesperrt und bei beispielsweise − 15 Volt leitend sind. Zur Vereinfachung ist hier angenommen, daß die Masse auf Bezugspotential liegt und die Referenzspannungsquelle $U_R$ − 15 Volt besitzt. Die Amplituden der in Fig. 2 gezeigten Spannungen haben ebenfalls − 15 Volt. Die Transistoren T3 und T4 werden stets gleichzeitig ausgesteuert, so daß ihre Gates miteinander verbunden sind.

Während der Zeit $t_0$ bis $t_1$ wird der IR-Detektor 1 mit der Nutzstrahlung belichtet. Dabei öffnet zunächst die Gatespannung U3 die Transistoren T3 und T4. Während dieser Zeit sind die Gatespannungen U1 und U2 der Transistoren T1 bzw. T2 Null und somit die Transistoren T1 und T2 gesperrt. Die Kondensatoren C1 und C2, die gleiche Kapazität haben, werden nun über die Transistoren T3 und T4 auf die Referenzspannung $U_R$ aufgeladen.

Nachdem die Gatespannung U3 auf Null Volt abgesunken ist, somit die Transistoren T3 und T4 gesperrt sind, wird zunächst die Spannung U1 angelegt, welche den Transistor T1 öffnet, so daß sich nun der Kondensator C1 über den von der Nutzspannung bestrahlten IR-Detektor 1 entsprechend der Intensität der Bestrahlung auf den Spannungswert $U_{C1}$ entladen kann.

Nun werden der Transistor T1 gesperrt und zur Zeit $t_1$ (vergl. Fig. 2) die Blende geschlossen, so daß, wenn der Transistor T2 durch die Gatespannung U2 geöffnet wird, der Kondensator C2 entsprechend der Intensität der Thermischen Hintergrundstrahlung auf die Spannung $U_{C2}$ entladen wird. An der Steuerelektrode G1 liegt nun die Spannung $U_{C1}$ und an der Steuerelektrode G2 die Spannung $U_{C2}$.

Anschließend wird die Diodenspannung $U_0$ auf Null Volt gesteuert. Dadurch kann eine aus Löchern bestehende positive Ladung unter die Steuerelektroden G1 und G2 fließen. Wird nun zur Zeit $t_2$ die Diodenspannung $U_0$ wider auf beispielsweise − 15 Volt gebracht, so ergibt sich ein örtlicher Potentialverlauf, wie er in Fig. 3 dargestellt ist. Hierin ist x eine Ortskoordinate.

Das Gebiet A unter der P⁺-Diffusion 3 befindet sich auf einem der Spannung von − 15 Volt entsprechenden Potential, das Gebiet B auf einem der Spannung $U_{C1} = U1$ der Steuerelektrode G1, das Gebiet C auf einem der Spannung $U_{C2} = U2$ der Steuerelektrode G2 und das Gebiet D auf einem der Spannung U4 der Steuerelektrode G4 entsprechendem Potential. Die Spannung U4 ist zum Zeitpunkt $t_2$ noch Null Volt. Die im Gebiet C befindliche Ladung kann daher in Richtung auf das Gebiet D nicht abfließen, jedoch in Richtung auf das Gebiet A nur soweit, wie es die Potentialschwelle im Gebiet B zuläßt. Die im Gebiet C verbleibende Ladungsmenge ist also proportional der Spannungsdifferenz $U2-U1 = U_{C2}-U_{C1}$ und damit proportional dem von der thermischen Hintergrundstrahlung befreiten Nutzsignal des IR-Detektors.

Die Ladung im Gebiet C wird nun durch die Steuerspannungen U4, U5 und folgende, die in an sich bekannter Weise an die Steuerelektroden G4, G5 und folgende gelegt werden, durch das Ladungstransferelement geschoben und kann an seinem Ausgang abgegriffen werden.

**Ansprüche**

1. Verfahren zur Trennung des thermischen Hintergrundsignals eines IR-Detektors (1) vom Nutzsignal mit einer Einrichtung zur periodischen Abblendung des Detektors und unter Verwendung zweier Kondensatoren (C1, C2) gleicher Kapazität zum Speichern von dem Nutz- und dem Hintergrundsignal proportionalen Ladungen und zur Erzeugung einer dem Nutzsignal proportionalen Differenzspannung, dadurch gekennzeichnet, daß die zwei Kondensatoren (C1, C2) gleicher Kapazität bis zur Spannung einer Referenzspannungsquelle ($U_R$) aufgeladen werden, daß anschließend der eine Kondensator (C1) während einer vorgegebenen Zeitdauer durch den belichteten Detektor (1) entladen wird, daß anschließend der andere Kondensator (C2) während einer gleichen Zeitdauer durch den unbelichteten Detektor (1) entladen wird und daß die der Differenz der Kondensatorspannungen entsprechende Nutzsignalspannung zwei benachbarten Elektroden (G1, G2) eines Ladungstransferelementes (4) zugeführt wird.

2. Schaltungsanordnung zur Durchführung des Verfahrens nach Anspruch 1, dadurch gekennzeichnet, daß jeweils die einen Anschlüsse der Kondensatoren (C1, C2) an den jeweiligen zugeordneten Steuerelektroden (G1, G2) des Ladungstransferelementes (4) angeschlossen sind, über einen ersten und zweiten getrennt steuerbaren Schalter (T1, T2) mit dem IT-Detektor (1) und über einen dritten und vierten gemeinsamen steuerbaren Schalter (T3, T4) mit der Referenz-Spannungsquelle ($U_R$) verbindbar sind und daß jeweils der andere Anschluß der Kondensatoren (C1, C2) auf einem konstanten Potential (Masse) liegt.

3. Schaltungsanordnung nach Anspruch 2, dadurch gekennzeichnet, daß sie für jeden IR-Detektor einmal vorgesehen und gemeinsam mit den IR-Detektoren auf einem Halbleiter-Chip integriert ist.

4. Schaltungsanordnung nach Anspruch 3, dadurch gekennzeichnet, daß sie in MOS-Planar-Technologie realisiert ist.

**Claims**

1. Method for the separation of the thermal background signal of an infra-red detector (1) from the useful signal with an equipment for the periodic blanking of the detector and with the use of two capacitors (C1, C2) of equal capacitance for the storing of charges proportional to the useful and to the background signal and for the generation of a difference voltage proportional to the useful signal, characterised thereby, that the two capacitors (C1, C2) of equal capacitance are charged up to the voltage of a reference voltage source ($U_R$), that subsequently the one capacitor (C1) is discharged by the illuminated detector (1) during a predetermined time interval, that subsequently the other capacitor (C2) is discharged by the unilluminated detector (1) during a like time interval and that the useful signal voltage corresponding to the difference between the capacitor voltages is fed to two neighbouring electrodes (G1, G2) of a charge transfer element (4).

2. Circuit arrangement for the performance of the method according to claim 1, characterised thereby, that each of the one terminals of the capacitors (C1, C2) are connected to the respectively associated control electrodes (G1, G2) of the charge transfer element (4), are connectable through a first and a second separately controllable switch (T1, T2) with the infra-red detector (1) and through a third and a fourth jointly controllable switch (T3, T4) with the reference voltage source ($U_R$) and that each of the other terminals of the capacitors (C1, C2) lie at a constant potential (ground).

3. Circuit arrangement according to claim 2, characterised thereby, that it is provided once for each infra-red detector and integrated together with the infra-red detectors on a semiconductor chip.

4. Circuit arrangement according to claim 3, characterised thereby, that it is realised in MOS planar technique.

**Revendications**

1. Procédé pour séparer le signal de bruit de fond thermique du signal utile d'un détecteur IR (1), avec un dispositif de masquage périodique du détecteur et utilisation de deux condensateurs (C1, C2) de même capacité pour emmagasiner des charges proportionnelles aux signaux utile et de bruit de fond, et produire une tension différentielle proportionnelle au signal utile, ledit procédé étant caractérisé en ce que les deux condensateurs (C1, C2) de même capacité sont chargés jusqu'à la tension d'une source de tension de référence ($U_R$) ; un condensateur (C1) est ensuite déchargé pendant une durée prédéterminée par le détecteur éclairé (1) ; le second condensateur (C2) est ensuite déchargé pendant une durée égale par le détecteur non éclairé (1) ; et la tension du signal utile, égale à la différence des tensions de condensateur, est appliquée à deux électrodes voisines (G1, G2) d'un élément de transfert de charge (4).

2. Montage pour la mise en œuvre du procédé selon revendication 1, caractérisé en ce que les premières bornes des condensateurs (C1, C2) sont connectées aux électrodes de commande (G1, G2) de l'élément de transfert de charge (4) qui leur sont affectées, reliées au détecteur IR (1) par un premier et un deuxième interrupteur (T1, T2) commandés séparément, et à la source de tension de référence ($U_R$) par un troisième et un quatrième interrupteur (T3, T4) à commande commune ; et la seconde borne des condensateurs (C1, C2) est portée à un potentiel constant (masse).

3. Montage selon revendication 2, caractérisé en ce qu'il est prévu pour chaque détecteur IR et intégré avec les détecteurs IR sur une pastille semiconductrice.

4. Montage selon revendication 3, caractérisé par sa réalisation en technologie planar MOS.

FIG.1

FIG. 2

FIG. 3

2